(19) **Europäisches Patentamt**

**European Patent Office**

**Office européen des brevets**

(11) **EP 1 278 290 A1**

(12) **EUROPEAN PATENT APPLICATION**

(43) Date of publication:
22.01.2003 Bulletin 2003/04

(51) Int Cl.$^7$: **H02K 9/19**

(21) Application number: **02010859.3**

(22) Date of filing: **15.05.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Kobayashi, Masakazu**<br>  **Yokosuka-shi, Kanagawa (JP)**<br>• **Ohtsuka, Koji**<br>  **Kounan-ku, Yokohama-shi, Kanagawa (JP)** |
| (30) Priority: **21.06.2001 JP 2001187589**<br>        **26.02.2002 JP 2002049439** | (74) Representative: **Weber, Joachim, Dr.**<br>**Hoefer, Schmitz, Weber & Partner**<br>**Patentanwälte**<br>**Gabriel-Max-Strasse 29**<br>**81545 München (DE)** |
| (71) Applicant: **Nissan Motor Co., Ltd.**<br>**Yokohama-shi, Kanagawa (JP)** | |

(54) **Cooling structure for rotating electric machine**

(57)     A cooling structure for a rotating electric machine is proposed which displays high cooling performance with a simple structure, does not undergo reductions in efficiency when the rotating electric machine is operating at high rotation speeds and has high reliability. The rotating shaft (2) of the rotating element (1) comprises a hollow structure and an inner cylindrical section (6) which rotates together with the rotating shaft is provided with a space in an inner section of the rotating shaft (2). Coolant flows in an annular gap (7) between the rotating shaft (2) and the inner cylindrical section (6). In this manner, the rotating element is effectively cooled with a small amount of coolant.

FIG.1A

EP 1 278 290 A1

## Description

FIELD OF THE INVENTION

This invention relates to a cooling structure for a rotating element of a rotating electric machine.

BACKGROUND OF THE INVENTION

Tokkai Hei 9-46973 published by the Japanese Patent Office in 1997 discloses a cooling structure for a rotating element of a rotating electric machine. The cooling structure as disclosed in this publication is provided with an injection pipe for cooling liquid which is fixed to the case. One end of the injection pipe is inserted into an open end of a hollow rotation shaft of a rotating element. Cooling liquid is transferred to the center of the rotating element from the outside.

SUMMARY OF THE INVENTION

However since cooling liquid in the conventional technique fills the gap between the hollow rotation shaft which rotates with the rotating element and the fixed injection pipe, the efficiency of the rotating electric machine is particularly reduced at high rotation speeds as a result of the viscosity resistance of the cooling liquid. Furthermore since the radius of the bearing of the rotation shaft is large due to the existence of the injection pipe inserted into the hollow rotation shaft, the bearing loss is large.

It is therefore an object of this invention to provide a simple cooling structure for a rotating electric machine which displays highly efficient cooling performance and does not result in reductions in efficiency at high rotation speeds.

In order to achieve above object, this invention provides a cooling structure for a rotating electric machine having a rotating element which is provided with a rotating shaft having a hollow structure, the cooling structure comprising: an inner cylindrical section disposed in the rotating shaft and rotating together with the rotating shaft; and an annular gap provided between the inner peripheral surface of the rotating shaft and the outer peripheral surface of the inner cylindrical section. Coolant flows in the annular gap.

The details as well as other features and advantages of this invention are set forth in the remainder of the specification and are shown in the accompanying drawings.

BRIEF DESCRIPTION OF THE DRAWINGS

Fig. 1A is a sectional view of a rotating element according to a first embodiment of this invention and Fig. 1B is a sectional view of an alternative rotating element according to a first embodiment of this invention.

Fig. 2 shows a first cylindrical section of a hollow rotation shaft: Fig. 2A is a front view and Fig. 2B is a sectional view along the line 2B - 2B in Fig. 2A.

Fig. 3 shows an inner cylindrical section of the hollow rotation shaft: Fig. 3A is a front view and Fig. 3B is a lateral view.

Fig. 4 is an enlarged sectional view of the hollow rotation shaft in proximity to the inner cylindrical section.

Fig. 5 shows the first cylindrical section of the hollow rotation shaft according to another embodiment: Fig. 5A is a front view and
Fig. 5B is a sectional view along the line 5B - 5B.

Fig. 6 is a sectional view of a rotating element according to another embodiment of this invention.

DESCRIPTION OF THE PREFERRED EMBODIMENTS

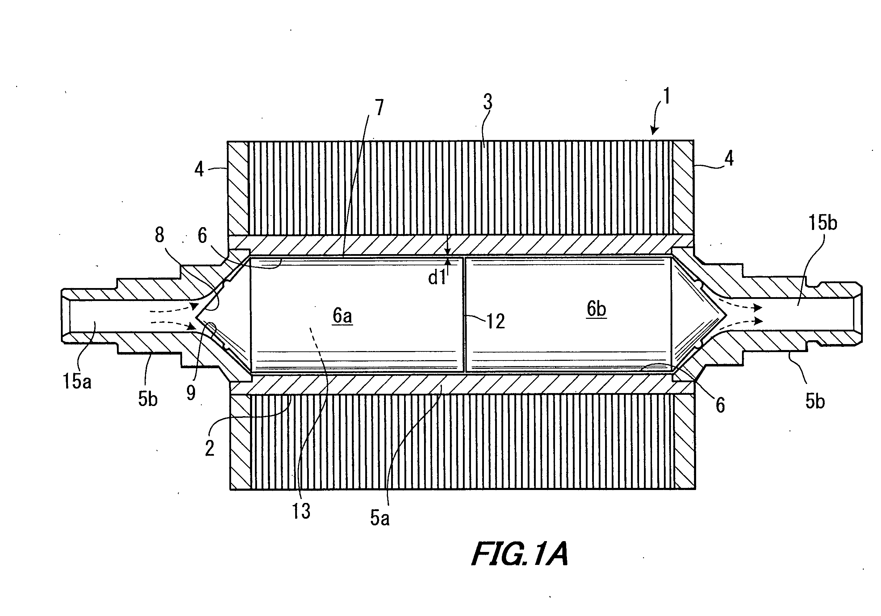

Referring to Fig. 1A, a rotating element 1 of a rotating electric machine is provided with a hollow rotating shaft 2 having a hollow structure, a plurality of magnetized steel plates 3 which are provided on an outer periphery of the hollow rotating shaft 2 and are laminated in a direction of the rotational axis of the rotating element 1, and two endplates 4 fixed to the hollow rotating shaft 2. The two endplates 4 sandwich the plurality of laminated magnetized steel plates 3, namely the core of the rotating element 1. The rotating electric machine is operated for example as a motor.

The hollow rotating shaft 2 comprises a first cylindrical section 5a positioned in a central section of the hollow rotating shaft 2 and two second cylindrical sections 5b which are stepped and disposed on both ends of the first cylindrical section 5a. The first cylindrical section 5a has a constant radius in a direction of the rotation axis and is inserted and fitted into the plurality of magnetized steel plate 3. Each second cylindrical section 5b projects outwardly from each end plate 4, and across the whole length it has an outer radius and inner radius which are smaller than the outer radius and inner radius of the first cylindrical section 5a, respectively. The first cylindrical section 5a is integrated with the plurality of magnetized steel plates 3 of the rotating element 1 and the second cylindrical section 5b is fixed at both ends of the first cylindrical section 5a. A section of the second cylindrical section 5b is supported to rotate freely on the casing through a seal and bearing (not shown).

An inner cylindrical section 6 is inserted into the first cylindrical section 5a. The inner cylindrical section 6 is thin-walled and hollow. A narrow annular gap 7 is formed between the inner peripheral surface of the first cylindrical section 5a and the outer peripheral surface of the inner cylindrical section 6. The second cylindrical section 5b is fitted to the first cylindrical section 5a from both sides after assembling the inner cylindrical section 6 into the inner section of the hollow rotating shaft 2 of the rotating element 1 so that the inner cylindrical section 6 is fixed to the rotating element 1. In this manner, the hollow rotating shaft 2 is provided with the second cylindrical section 5b on each end.

The inner section of the second cylindrical section 5b comprises an inlet passage 15a and an outlet passage 15b. Coolant, which is introduced from the outside of the hollow rotating shaft 2 to the inlet passage 15a, flows through the annular gap 7 and cools the inner section of the rotating element 1. Thereafter the coolant is discharged from the outlet passage 15b to the outside of the hollow rotating shaft 2.

When the sectional area of the inlet passage 15a perpendicular to a direction of the rotating axis is taken to be **Ai** and the sectional area of the annular gap 7 perpendicular to a direction of the rotating axis is taken to be **Ac,** the following relationship is established.

$$Ai \geq Ac$$

Consequently, the flow speed of coolant in the annular gap 7 is increased compared with the flow speed of the coolant in the inlet and outlet passage 15a, 15b, which increases the cooling efficiency in turn.

The inner cylindrical section 6 is divided into two sections 6a, 6b. The sections 6a, 6b of the inner cylindrical section 6 are open at one end and closed at the other end. The sections 6a, 6b of each inner cylindrical section 6 are housed in the first cylindrical section 5a so that the open ends are mutually opposed.

The sections 6a, 6b of the inner cylindrical section 6 are pressed into contact from both closed ends by the two second cylindrical sections 5b so that the inner cylindrical section 6 rotates together with the rotating element 1. The closed end of the sections 6a, 6b of the inner cylindrical section 6 comprises a conical end wall 8, namely a protruding end wall. The conical end wall 8 is positioned in front of a conical surface 9. The conical end wall 8 faces a conical surface 9 constituting an enlarging section of the passages 15a, 15b on an inner section of the second cylindrical section 5b. The shape of the end wall 8 is not limited to a conical shape and may be a convex shape which gradually narrows.

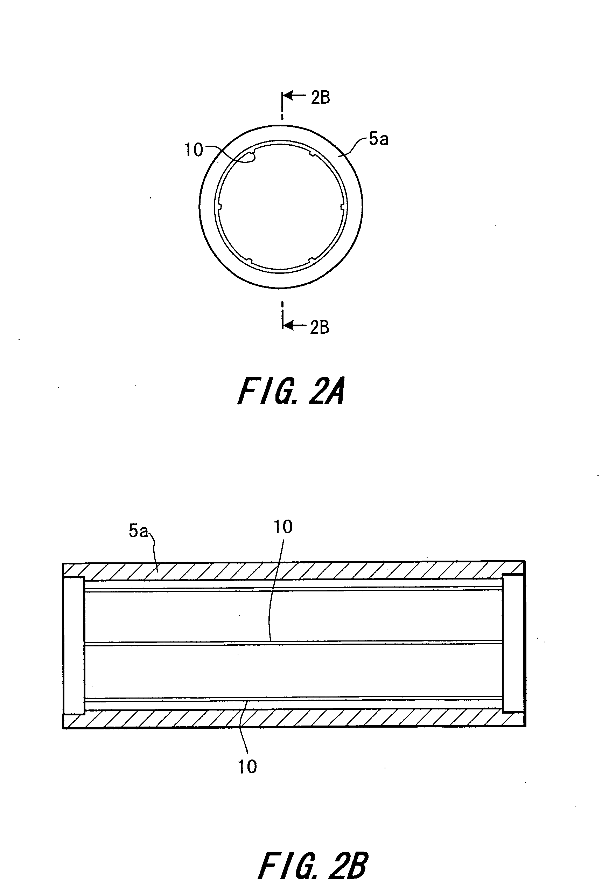

Referring now to Fig. 2, a plurality of splines 10 are formed at equal intervals in a peripheral direction on the inner peripheral surface of the first cylindrical section 5a. The plurality of splines 10 extends in an axial direction of the first cylindrical section 5a, in other words in a direction of the rotation axis. The plurality of splines 10 make contact with the outer peripheral surface of the inner cylindrical section 6 to maintain the annular gap 7 and divide the annular gap 7 between the first cylindrical section 5a and the inner cylindrical section 6 into several equal portions. The splines 10 also have the function of increasing the cooling efficiency by increasing the surface area of the inner peripheral surface of the first cylindrical section 5a.

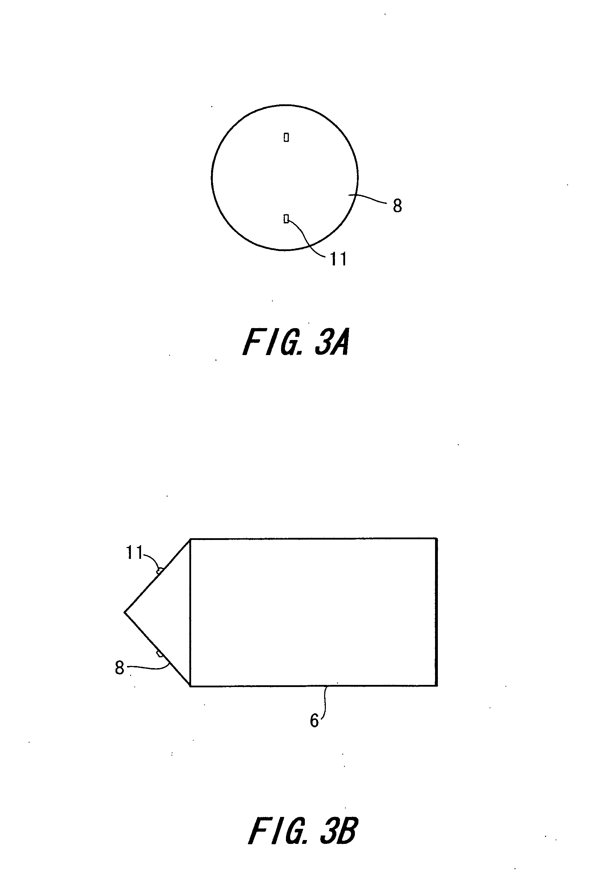

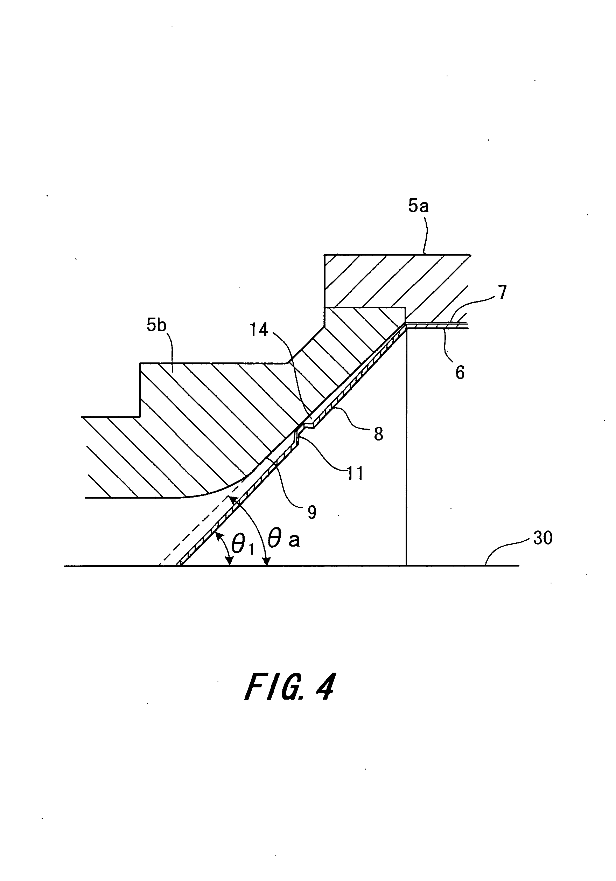

Referring now to Fig. 3 and Fig. 4, a plurality of tiny projections 11 are formed on the conical end wall 8 of the inner cylindrical section 6. The tiny projections 11 have a small size in comparison with the conical end wall 8. A tiny annular space 14 is formed between the conical end wall 8 and the conical surface 9 because the tiny projections 11 come into contact with the conical surface 9 of the second cylindrical section 5b.

The splines 10 can be manufactured in a cost-effective manner by an extraction process. The tiny projections 11 can also be simply manufactured by a pressing process.

The opposed pair of sections 6a, 6b in the inner cylindrical section 6 are integrated by being pressed and gripped by the two second cylindrical sections 5b. However a slit 12 with an extremely small width is naturally formed along the contact surface of the sections 6a, 6b of the inner cylindrical section 6 because the processed contact surface normally comprises tiny undulations. Thus the width of the slit is so small as not to be apparent to the naked eye. Since the inner space 13 of the inner cylindrical section 6 is connected with the outer annular gap 7 because of the slit 12, a portion of the coolant also fills the inner space 13.

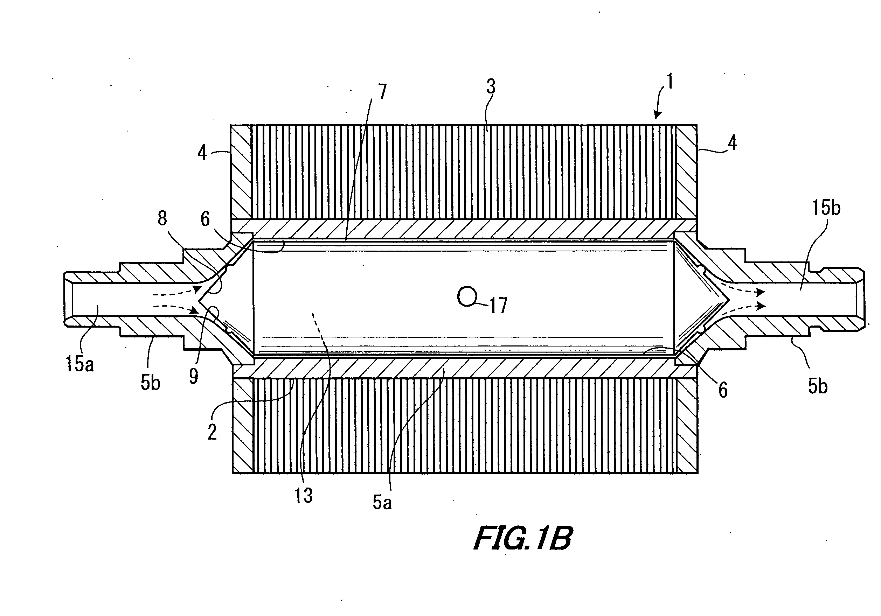

Referring to Fig. 1B, when the inner cylindrical section 6 is not divided into two sections, the inner cylindrical section 6 can be manufactured as an integrated component. In this case, the inner space 13 of the inner cylindrical section 6 can be connected with the outer annular gap 7 by providing a hole 17 in the inner cylindrical section 6.

Referring now to Fig. 4, the difference in the inclination of the conical surface 9 of the second cylindrical section 5b and the conical end wall 8 of the inner cylindrical section 6 will be described. Due to the tiny projections 11, the angle θa subtended by the inner conical face 9 and the rotation axis 30 is smaller than the angle θi subtended by the conical wall face 8 and the rotation axis 30. The width of the annular space 14 gradually reduces towards the annular gap 7. Consequently, when coolant flows into the annular space 14 between the conical end wall 8 and the conical surface 9 from the inlet passage 15a, the cross-sectional area of the passage of the coolant is gradually reduced. Thus, the coolant flowing towards the annular gap 7 undergoes rapid acceleration and does not display a large pressure loss. This result has the effect of reducing pressure loss in the pump which supplies coolant.

The above structure allows flow of coolant from the inlet passage 15a into the annular gap 7 between the inner cylindrical section 6 and the first cylindrical section 5a. A portion of the coolant fills the inner space 13 of the inner cylindrical section 6 from the tiny slit 12 which is formed between sections 6a, 6b of the inner cylindrical section 6 in order to cool the rotating element 1 from the inside. Thereafter the coolant is discharged from the outlet passage 15b. Since the coolant has a high flow speed when flowing through the annular gap 7, the coolant removes heat from the rotating element 1 in an efficient manner. When a general-purpose lubricating oil is used as a coolant, it is preferred that the width d1 of the annular gap 7 is greater than 0.3 mm. This setting improves the cooling efficiency and does not generate excessive pressure loss. The upper limit of the width d1 of the annular gap 7 are determined from the relationship $Ai \geq Ac$ of the cross-sectional area $Ai$ of the inlet passage 15a with the cross sectional area $Ac$ of the annular gap 7.

The annular gap between the first cylindrical section 5a and the inner cylindrical section 6 is maintained at equal intervals by the splines 10. Thus the coolant displays a constant flow rate and as a result an equal cooling effect is obtained on the entire periphery of the first cylindrical section 5a.

The hollow rotating shaft 2 of the rotating element 1 is formed from a first cylindrical section 5a with a large radius and a second cylindrical section 5b with a small radius. The thin-walled inner cylindrical section 6 is disposed in the inner section of the first cylindrical section 5a. Since a large inner space 13 is formed in the hollow rotating shaft 2, the weight of the hollow rotating shaft 2 is low and the inertia of the hollow rotating shaft 2 is conspicuously low in comparison to a rotating shaft without an inner space 13. Consequently, the rotating performance and vibration characteristics of the rotating electric machine are improved.

The inner space 13 of the inner cylindrical section 6 is connected to the annular gap 7 through a slit 12 and coolant also fills the inner space 13 of the inner cylindrical section 6. Consequently, even when the temperature or pressure of the coolant varies, the pressure differential between the inner and outer sections of the inner cylindrical section 6 is small. As a result, although the inner cylindrical section 6 which enters the first cylindrical section 5a is extremely thin, deformation of the inner cylindrical section 6 is avoided. In other words, it is possible to prevent the width of the annular gap 7 from being unnecessarily enlarged and the annular gap 7 from being closed. Consequently improved stable cooling performance is maintained at all times.

Furthermore since the bearing on the casing grips the second cylindrical section 5b with a small radius, bearing loss is reduced and the rotating element 1 displays excellent rotation performance.

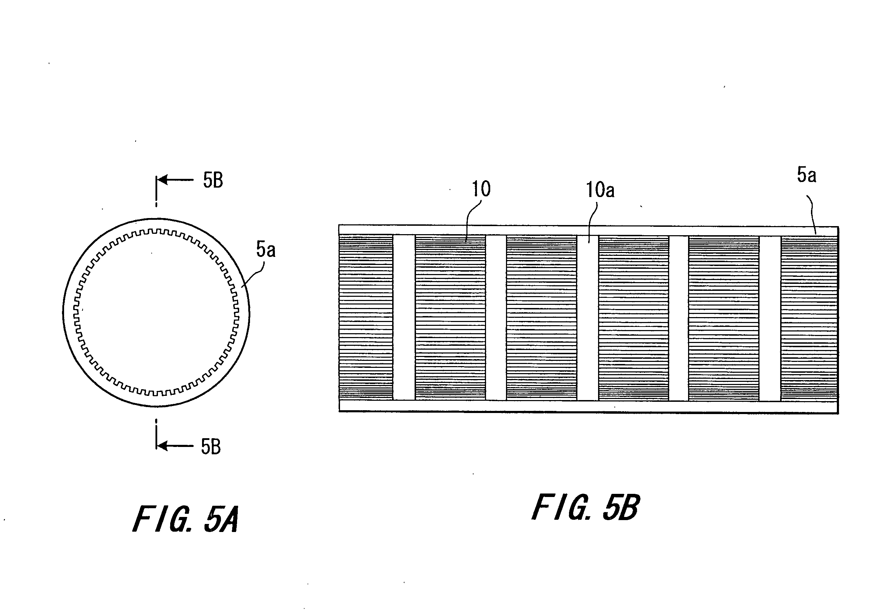

Referring to Fig. 5, a second embodiment of this invention will be described. In the second embodiment, the number of splines 10 is increased in comparison to the first embodiment. Consequently, the increase in the heat radiating surface makes the heat radiation effect higher than that in the first embodiment. The splines 10 are divided at a plurality of positions in an axial direction by notches 10a. The cooling effect is increased because the coolant displays turbulent flow at the divided positions.

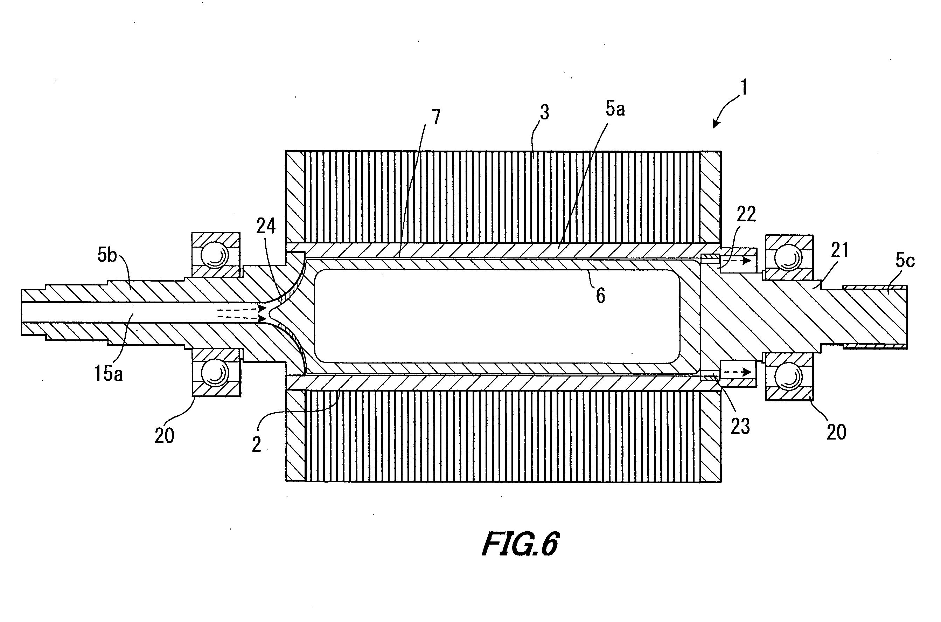

Referring to Fig. 6, a third embodiment of this invention will be described. The hollow rotating shaft 2 is provided with a first cylindrical section 5a with a large radius, a second cylindrical section 5b with a small radius disposed upstream side of coolant flow and a stepped shaft 5c disposed on the downstream side of coolant flow. The stepped shaft 5c has a small radius in comparison with the outer radius of the first cylindrical section 5a, over its entire length. The stepped shaft 5c is provided with a small-radius section 21 and a flange 22. The flange 22 is engaged with the inner periphery of the first cylindrical section 5a and is fixed in a position making contact with the inner cylindrical section 6. The small-radius section 21 is retained on a bearing 20. A plurality of coolant outlets 23 connected with the annular gap 7 are formed on the flange 22. A baffle plate 24 is disposed in the passage connecting the inlet passage 15a of the second cylindrical section 5b with the annular gap 7. This allows the circulation of coolant to simply follow the rotation of the hollow rotating shaft 2. Furthermore, in this embodiment, the inner space in the inner cylindrical section 6 is sealed to prevent coolant from entering.

In the third embodiment, the coolant flowing in the annular gap 7 does not undergo a large resistance because it is discharged to the outside of the rotating element 1 from a coolant outlet 23. As a result, it is possible to reduce the pressure loss in the coolant in comparison to the first embodiment in which coolant flowing through the annular gap 7 is recirculated to the outlet passage. In addition, the discharged coolant can be used in order to lubricate the bearing 20.

The entire contents of Japanese Patent Applications P2001-187589 (filed June 21, 2001) and P2002-49439 (filed February 26, 2002) are incorporated herein by reference.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

**Claims**

1. A cooling structure for a rotating electric machine having a rotating element (1) which is provided with a rotating shaft (2) having a hollow structure, the cooling structure comprising:

   an inner cylindrical section (6) disposed in the rotating shaft (2), which rotates together with the rotating shaft (2); and
   an annular gap (7) provided between the inner peripheral surface of the rotating shaft (2) and the outer peripheral surface of the inner cylindrical section (6)

   wherein coolant flows in the annular gap (7).

2. The cooling structure for a rotating electric machine as defined in Claim 1, wherein an inner space (13) in the inner cylindrical section (6) is connected with the annular gap (7) and the coolant remains in the inner space (13).

3. The cooling structure for a rotating electric machine as defined in Claim 1 or Claim 2, wherein the rotating shaft (2) comprises a first cylindrical section (5a) engaged with a core (3) of the rotating element and a second cylindrical section (5b) disposed on both ends of the first cylindrical section (5a); and wherein the inner cylindrical section (6) is disposed in the first cylindrical section (5a); the annular gap (7) and inner passages (15a, 15b) of the two second cylindrical sections (5b) are connected; and the coolant flows from one inner passage (15a) through the annular gap (7) to the other inner passage (15b).

4. The cooling structure for a rotating electric machine as defined in Claim 3, wherein the cross-sectional area of the annular gap (7) perpendicular to a direction of the rotating axis of the rotating element (1) is smaller than the cross-sectional area of the inner passages (15a, 15b) of the second cylindrical section (5b) perpendicular to the direction of the rotating axis of the rotating element (1).

5. The cooling structure for a rotating electric machine as defined in Claim 3 or Claim 4, wherein the inner cylindrical section (6) comprises two protruding end walls (8) on both ends thereof; each of the inner passages (15a, 15a) of the second cylindrical section comprises an enlarging section respectively facing one protruding end wall (8); and each protruding end wall (8) is inserted with a gap (14) into the enlarging section, the gap (14) being connected with the annular gap (7).

6. The cooling structure for a rotating electric machine as defined in any one of Claim 1 to Claim 5, wherein the width of the annular gap (7) is greater than 0.3 mm.

7. The cooling structure for a rotating electric machine as defined in any one of Claim 3 to Claim 5, wherein the inner peripheral surface of the first cylindrical section (5a) comprises a plurality of splines (10) extending in an axial direction of the first cylindrical section (5a), the plurality of splines (10) contacting with the outer peripheral surface the inner cylindrical section (6) to maintain the annular gap (7).

8. The cooling structure for a rotating electric machine as defined in Claim 7, wherein the splines (10) are divided at one or more positions in an axial direction of the first cylindrical section (5a).

9. The cooling structure for a rotating electric machine as defined in Claim 1, wherein the rotating shaft (2) comprises a first cylindrical section (5a) engaged with a core (3) of the rotating element (1), a second cylindrical section (5b) disposed on one end of the first cylindrical section (5a) and a shaft (5c) disposed on the other end, the inner cylindrical section (6) being positioned in the first cylindrical section (5a); the annular gap (7) is connected with an inner passage of the second cylindrical section (5b) and the annular gap (7) is connected with the outside of the rotating element (1).

10. The cooling structure for a rotating electric machine as defined in Claim 1 or Claim 2, wherein the rotating shaft comprises a first cylindrical section (5a) engaged with a core (3) of the rotating element and one second cylindrical section (5b) disposed on one end of the first cylindrical section (5a); the inner cylindrical section (6) is positioned in the first cylindrical section (5a); the annular gap (7) and an inner passage (15a) of the second cylindrical section (5) are connected so that coolant flows from the inner passage (15a) into the annular gap (7).

*FIG.1A*

FIG.1B

2B

10

5a

2B

# FIG. 2A

5a

10

10

# FIG. 2B

*FIG. 3A*

*FIG. 3B*

5a

5b

14

7

6

8

11

9

$\theta_1$ $\theta$ a

30

# FIG. 4

*FIG. 5A*

*FIG. 5B*

**FIG.6**

**European Patent Office**

**EUROPEAN SEARCH REPORT**

Application Number

EP 02 01 0859

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 440 096 A (INDEX-WERKE GMBH & CO. KG) 7 August 1991 (1991-08-07) * abstract * * column 8, line 28-44; figure 2 * | 1,2 | H02K9/19 |
| X | US 5 489 810 A (FERREIRA ET AL.) 6 February 1996 (1996-02-06) | 1-6,9,10 | |
| A | * abstract * * column 4, line 47-63 * * column 5, line 20-35 * * column 6, line 64 - column 7, line 65; figures 1,2,8,9 * | 7,8 | |
| A | US 4 203 044 A (LINSCOTT, JR.) 13 May 1980 (1980-05-13) * abstract * * column 2, line 43 - column 3, line 40; figures 1,2 * | 1 | |

TECHNICAL FIELDS SEARCHED (Int.Cl.7)

H02K

The present search report has been drawn up for all claims

| Place of search | Date of completion of the search | Examiner |
|---|---|---|
| BERLIN | 1 October 2002 | Beitner, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 02 01 0859

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2002

| Patent document cited in search report | | Publication date | Patent family member(s) | | Publication date |
|---|---|---|---|---|---|
| EP 440096 | A | 07-08-1991 | DE | 4002453 A1 | 01-08-1991 |
| | | | DE | 59100824 D1 | 24-02-1994 |
| | | | EP | 0440096 A1 | 07-08-1991 |
| | | | JP | 5345253 A | 27-12-1993 |
| US 5489810 | A | 06-02-1996 | EP | 0756775 A1 | 05-02-1997 |
| | | | JP | 2980377 B2 | 22-11-1999 |
| | | | JP | 9512697 T | 16-12-1997 |
| | | | WO | 9529529 A1 | 02-11-1995 |
| | | | US | 5523635 A | 04-06-1996 |
| US 4203044 | A | 13-05-1980 | CA | 1101034 A1 | 12-05-1981 |
| | | | DE | 2900133 A1 | 19-07-1979 |
| | | | FR | 2414814 A1 | 10-08-1979 |
| | | | GB | 2013411 A ,B | 08-08-1979 |
| | | | IL | 56380 A | 27-02-1981 |
| | | | JP | 54097707 A | 02-08-1979 |
| | | | SG | 57782 G | 02-09-1983 |

EPO FORM P0459

For more details about this annex : see Official Journal of the European Patent Office, No. 12/82